# EUROPÄISCHE PATENTANMELDUNG

(11) **EP 4 361 485 A1**
(43) Veröffentlichungstag der Anmeldung: **01.05.2024**
(21) Anmeldenummer: 22020516.5
(22) Anmeldetag: 25.10.2022
(51) Int. Cl.: F16L 29/04, F16L 37/36, F17C 13/04, B60K 15/03

(54) **KUPPLUNGSVORRICHTUNG ZUM HERSTELLEN EINER VERBINDUNG ZUM TRANSFER EINES FLUIDS UND ENTSPRECHENDE VERFAHREN**

(71) Anmelder: Linde GmbH, 82049 Pullach (DE)
(72) Erfinder: Wellenhofer, Anton, 82049 Pullach (DE); Ambros, Walther, 82049 Pullach (DE)
(74) Vertreter: Zahn, Christoph

(57) **Zusammenfassung**

Kupplungsvorrichtung (200) zum Herstellen einer Verbindung zum Transfer eines Fluids zwischen einem ersten Behälter und einem zweiten Behälter, aufweisend eine erste Kupplungskomponente (210) und eine zweite Kupplungskomponente (220), wobei die erste Kupplungskomponente (210) an den ersten Behälter angeschlossen ist oder anzuschließen ist, wobei die zweite Kupplungskomponente an den zweiten Behälter angeschlossen ist oder anzuschließen ist, wobei die erste Kupplungskomponente (210) an einem verbindungsseitigen Ende einen Stutzen (212) aufweist, wobei die zweite Kupplungskomponente (220) an einem verbindungsseitigen Ende eine Hülse (222) aufweist, wobei der Stutzen und die Hülse derart ausgebildet sind, dass der Stutzen in die Hülse einführbar ist, wobei die erste Kupplungskomponente (210) eine erste Verschlusseinrichtung (213) mit einem mittels Federkraft beaufschlagten ersten Kolben aufweist, wobei die erste Verschlusseinrichtung derart ausgebildet ist, dass die erste Fluidleitung mittels des ersten Kolbens verschließbar und öffenbar ist, wobei die zweite Kupplungskomponente (220) eine zweite Verschlusseinrichtung (223) mit einem mittels Federkraft beaufschlagten zweiten Kolben aufweist, wobei die zweite Verschlusseinrichtung derart ausgebildet ist, dass die zweite Fluidleitung mittels des zweiten Kolbens verschließbar und öffenbar ist, wobei die erste Kupplungskomponente (210) und die zweite Kupplungskomponente (220) derart ausgebildet sind, dass, wenn der Stutzen um mehr als eine vorgegebene Strecke in die Hülse eingeführt ist, der erste Kolben und der zweite Kolben jeweils mit einer Kraft beaufschlagt sind, sodass die erste Verschlusseinrichtung und die zweite Verschlusseinrichtung geöffnet sind.

## Beschreibung

Die Erfindung betrifft eine Kupplungsvorrichtung zum Herstellen einer Verbindung zum Transfer eines Fluids, ein Verfahren zum Herstellen einer solchen Verbindung, ein Verfahren zum Trennen einer solchen Verbindung sowie eine Verwendung einer solchen Kupplungsvorrichtung.

Wasserstoff, der z.B. als Treibstoff für Fahrzeuge verwendet wird, oder auch andere Fluide wie insbesondere eines gasförmigen oder verflüssigten Gases können von einem in einen anderen Behälter umgefüllt bzw. transferiert werden. Dies kann z.B. beim Beliefern einer Wasserstofftankstelle mit Wasserstoff von einem Transport-LKW der Fall sein oder z.B. auch das Befüllen eines Tankschiffs mit Wasserstoff.

Für den Transfer müssen die zwei Behälter in der Regel verbinden bzw. gekoppelt werden, d.h. es muss eine Verbindung zum Transfer des Fluids zwischen den zwei Behältern hergestellt werden. Hierfür können typische Kupplungen mit einer langen Nase verwendet werden, die mittels Verschraubung fixiert werden. Der Einsatz solcher meist bei z.B. Helium verendete Kupplungen für den Transfer von Wasserstoff ist aber in der Regel sehr zeitaufwändig, da hierzu vor dem Transfer das gesamte System mittels einer Vakuumpumpe evakuiert, mit einem Gaserhitzer gespült, gereinigt und abgekühlt (kaltgefahren) werden muss. Hierfür teils mehrere Stunden an Zeitaufwand nötig, nur um die Verbindung herzustellen, während der Transfer selbst (je nach Größe der Behälter) deutlich kürzer sei kann. Bei mehreren zu befüllenden Behältern erhöht sich der Zeitaufwand damit deutlich. Außerdem ist für die erwähnten vorbereitenden Handlungen Equipment (Vakuumpumpe, Gaserhitzer) nötig, das gewartet werden muss. Bei längeren Transfers kann zudem eine Dichtung schwierig werden.

Vor diesem Hintergrund stellt sich die Aufgabe, eine verbesserte Möglichkeit für eine Verbindung zum Transfer von Fluid wie insbesondere eines gasförmigen oder verflüssigten Gases anzugeben.

### Offenbarung der Erfindung

Diese Aufgabe wird durch eine Kupplungsvorrichtung zum Herstellen einer Verbindung zum Transfer eines Fluids, ein Verfahren zum Herstellen einer solchen Verbindung, ein Verfahren zum Trennen einer solchen Verbindung sowie eine Verwendung einer solchen Kupplungsvorrichtung mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit Verbindungen zum Transfer von Fluiden wie insbesondere gasförmigen oder verflüssigten Gasen, bevorzugt Wasserstoff. Solche Verbindungen werden zwischen zwei Behältern, nachfolgend erster Behälter und zweiter Behälter genannt, verwendet, um das Fluid von dem ersten in den zweiten Behälter (oder auch umgekehrt) zu transferieren. Die Behälter selbst sind typischerweise nicht dauerhaft verbunden, sodass eine Verbindung nur zum Transfer des Fluids erforderlich wird. Dies ist insbesondere bei Wasserstoff als Fluid der Fall, der z.B. als Treibstoff verwendet werden soll. Hier kann z.B. Wasserstoff von einem Transport-LKW mit einem Tank als ersten Behälter in einen Speichertank einer Wasserstofftankstelle als zweiten Behälter umgefüllt werden. Denkbar ist z.B. auch das Befüllen eines Tankschiffs mit einem Speichertank als zweitem Behälter mit Wasserstoff, z.B. aus einem anderen Speichertank einer Aufbereitungsanlage als erstem Behälter.

Es sei erwähnt, dass sowohl für den ersten als auch den zweiten Behälter der Begriff des Behälters breit gefasst ist, also jedwede Art von Speichermöglichkeit für das zu transferierende Fluid umfasst. Auf die konkrete Art des Behälters kommt es bei der Verbindung dazwischen nicht an.

Es wird nunmehr eine Kupplungsvorrichtung zum Herstellen einer solchen Verbindung zum Transfer des Fluids vorgeschlagen, die eine erste Kupplungskomponente mit einer ersten Fluidleitung und eine zweite Kupplungskomponente mit einer zweiten Fluidleitung aufweist.

Die erste Kupplungskomponente ist an einem behälterseitigen Ende mit der ersten Fluidleitung an den ersten Behälter angeschlossen ist oder ist dort anzuschließen. Die zweite Kupplungskomponente ist mit der zweiten Fluidleitung an einem behälterseitigen Ende an den zweiten Behälter angeschlossen ist oder ist dort anzuschließen. Für beide Kupplungskomponenten gilt, dass diese typischerweise am entsprechenden Behälter fest angebracht bzw. verbaut sein können. Grundsätzlich denkbar ist aber auch, dass eine oder beide Kupplungskomponenten nur nach Bedarf an den betreffenden Behälter angeschlossen werden.

Ein Beispiel ist, dass die erste Kupplungskomponente an einem Tank-LKW angeschlossen und dort angebracht ist, die zweite Kupplungskomponente hingegen an einem zu befüllenden Tank (zweiter Behälter) z.B. an einer Wasserstofftankstelle. Wenn an mehreren zweiten Behältern jeweils eine zweite Kupplungskomponente angeschlossen ist, kann die erste Kupplungskomponente z.B. des Tank-LKWs mit jeder der zweiten Kupplungskomponenten verwendet werden, um die betreffenden zweiten Behälter zu befüllen.

Es sei erwähnt, dass es auf die Art, wie genau die jeweilige Kupplungskomponente an den betreffenden Behälter angeschlossen ist, nicht ankommt, jedoch sollte zumindest eine der beiden Kupplungskomponenten flexibel an dem betreffenden Behälter angeschlossen sein, z.B. über einen geeigneten Schlauch, um die Kupplungskomponenten relativ zueinander bewegen zu können.

Die erste Kupplungskomponente weist an einem verbindungsseitigen Ende (d.h. an demjenigen Ende, an dem die erste Kupplungskomponente mit der zweiten Kupplungskomponente zu verbinden ist) einen Stutzen auf. Die zweite Kupplungskomponente weist an einem verbindungsseitigen Ende eine Hülse auf. Dabei sind der Stutzen und die Hülse derart ausgebildet, dass der Stutzen, insbesondere passgenau, in die Hülse einführbar ist. Beispielsweise kann der Stutzen rohrförmig sein; auch die Hülse kann rohrförmig sein.

Weiterhin weist die erste Kupplungskomponente eine erste Verschlusseinrichtung mit einem mittels Federkraft beaufschlagten ersten Kolben auf, wobei die erste Verschlusseinrichtung derart ausgebildet ist, dass die erste Fluidleitung mittels des ersten Kolbens verschließbar und öffenbar ist. Beispielsweise kann die eine erste Verschlusseinrichtung einen Sitz für den ersten Kolben aufweisen, in welchen dieser mittels der Federkraft gedrückt wird. So kann z.B. eine geeignete Feder verwendet werden, die den Kolben in den Sitz drückt, sofern keine ausreichend große Kraft den Kolben gegen die Federkraft aufdrückt. Auf diese Weise wird die erste Fluidleitung verschlossen. Indem der erste Kolben aufgedrückt wird, kann die erste Fluidleitung geöffnet bzw. freigegeben werden.

Die zweite Kupplungskomponente weist eine zweite Verschlusseinrichtung mit einem mittels Federkraft beaufschlagten zweiten Kolben auf, wobei die zweite Verschlusseinrichtung derart ausgebildet ist, dass die zweite Fluidleitung mittels des zweiten Kolbens verschließbar und öffenbar ist. So kann z.B. eine geeignete Feder verwendet werden, die den Kolben in den Sitz drückt, sofern keine ausreichend große Kraft den Kolben gegen die Federkraft aufdrückt. Auf diese Weise wird die zweite Fluidleitung verschlossen. Indem der zweite Kolben aufgedrückt wird, kann die zweite Fluidleitung geöffnet bzw. freigegeben werden.

Sowohl bei der ersten als auch der zweiten Verschlusseinrichtung sollte darauf geachtet werden, dass der Kolben derart angeordnet ist, dass dieser nicht durch von Seiten des behälterseitigen Endes anliegenden Drucks des Fluids aufgedrückt wird. Zweckmäßig ist es, wenn der Kolben durch diesen Druck des Fluids in den Sitz gedrückt wird. Die Richtung der Kraft der Feder und des Drucks des Fluids sind damit gleich. Durch die Feder bzw. allgemein die Federkraft wird dabei ein sicheres Verschließen unabhängig vom Druck des Fluids erreicht.

Die erste Kupplungskomponente und die zweite Kupplungskomponente sind weiterhin derart ausgebildet, dass, wenn der Stutzen um mehr als eine vorgegebene Strecke in die Hülse eingeführt ist, der erste Kolben und der zweite Kolben jeweils mit einer Kraft beaufschlagt sind, sodass die erste Verschlusseinrichtung und die zweite Verschlusseinrichtung geöffnet sind. Hierbei kann also durch die erste Kupplungskomponente eine Kraft auf den Kolben der zweiten Kupplungskomponente ausgeübt werden und umgekehrt, sodass beide Kolben aufgedrückt werden und eine Fluidverbindung zwischen den zwei Behältern hergestellt ist.

Eine solche Kupplungsvorrichtung kann in warmem Zustand verwendet werden, um die Verbindung herzustellen, d.h. eine vorherige Abkühlung ist nicht nötig, wenngleich sich die Kupplungsvorrichtung natürlich nach hergestellter Verbindung aufgrund des kalten, durchfließenden Fluids abkühlen wird. Durch die Gestaltung mit den zwei Verschlusseinrichtungen und dem Stutzen kann eine einfache Herstellung der Verbindung erreicht werden, bei zugleich geringem Totraum.

Besonders zweckmäßig ist es, wenn der erste Kolben und der zweite Kolben derart ausgebildet sind, dass, wenn der Stutzen um mehr als die vorgegebene Strecke in die Hülse eingeführt ist, sich der der erste Kolben und der zweite Kolben gegenseitig mit Kraft beaufschlagen. Hierzu kann z.B. einer der zwei Kolben eine Nase oder einen Stift aufweisen, der an dem anderen Kolben, z.B. an einer entsprechende Ausnehmung, angreifen kann, sodass sich beide Kolben gegenseitig aufdrücken. Es sei erwähnt, dass die Kraft, die nötig ist, um die beiden Kolben aufzudrücken, beim Verbinden der zwei Kupplungskomponenten von außen aufgebracht werden muss.

Hierbei ist es bevorzugt, wenn die Kupplungsvorrichtung eine Arretierungseinrichtung aufweist, mittels welcher die erste Kupplungskomponente und die zweite Kupplungskomponente, wenn der Stutzen um mehr als die vorgegebene Strecke in die Hülse eingeführt ist, arretierbar sind. Beispielsweise kann die Arretierungseinrichtung ein an der ersten Kupplungskomponente angeordnetes Gewinde und ein an der zweiten Kupplungskomponente angeordnete Mutter aufweisen. Gewinde und Mutter können auch an der jeweils anderen Kupplungskomponente angeordnet sein.

Vorzugsweise sind die erste Kupplungskomponente und die zweite Kupplungskomponente außerdem derart ausgebildet, dass, wenn der Stutzen um weniger als die vorgegebene Strecke in die Hülse eingeführt ist, die erste Verschlusseinrichtung und die zweite Verschlusseinrichtung verschlossen sind. Damit ist sichergestellt, dass nur bei ausreichender Strecke, die der Stutzen in die Hülse eingeführt ist, die Verbindung hergestellt ist.

Die erwähnte, vorgegebenen Strecke kann durch die Wahl der Maße und Anordnung der Teile der Kupplungskomponenten, insbesondere von Verschlusseinrichtungen und Stutzen bzw. Hülse, vorgegeben werden. Es ist lediglich darauf zu achten, dass dann, wenn der Stutzen eine gewisse Strecke in die Hülse eingeführt ist, die beiden Kolben mit Kraft beaufschlagt sind.

Vorteilhafterweise sind die erste Kupplungskomponente und die zweite Kupplungskomponente derart ausgebildet, dass der Stutzen bis zu einem Anschlag in die Hülse einführbar ist, wobei, wenn der Stutzen bis zu dem Anschlag in die Hülse eingeführt ist, die Hülse um mehr als die vorgegebene Strecke in die Hülse eingeführt ist und die erste Verschlusseinrichtung und die zweite Verschlusseinrichtung aneinander anliegen. Damit kann sichergestellt werden, dass beim Verbinden der zwei Kupplungskomponenten, wenn der Anschlag erreicht ist, der Stutzen auch weit genug in die Hülse eingeführt ist.

Die zweite Verschlusseinrichtung kann in der zweiten Kupplungskomponente derart angeordnet sein, dass, wenn der Stutzen in die Hülse eingeführt wird oder ist, der Stutzen (wenn dieser rohrförmig ist) die zweite Verschlusseinrichtung umgibt. Damit können die erste Verschlusseinrichtung und die zweite Verschlusseinrichtung aneinander anliegen.

Vorzugsweise weist die erste Kupplungskomponente ein Ventil auf, mittels dessen die Fluidleitung der ersten Kupplungskomponente verschließbar und öffenbar ist. Ein solches Ventil kann in der ersten Fluidleitung angeordnet sein und auf geeignete Weise von außen betätigbar sein, z.B. mittels eines Handrads. Damit ist es möglich, den Transfer des Fluids nach Herstellen der Verbindung gezielt zu starten und zu beenden.

Zweckmäßigerweise weist die erste Kupplungskomponente wenigstens eine Spülleitung auf, die derart ausgebildet ist, dass ein Spülfluid, z.B. Helium, in den Stutzen einbringbar ist. Auch hier können eines oder mehrere Ventile vorgesehen sein, um die Spülleitung öffnen und verschließen zu können. Damit kann ein beim Verbinden entstehender Totraum gespült (bzw. belüftet) werden.

Die Erfindung betrifft auch ein Verfahren zum Herstellen einer Verbindung zum Transfer eines Fluids, unter Verwendung einer erfindungsgemäßen Kupplungsvorrichtung. Hierbei werden die erste Kupplungskomponente und die zweite Kupplungskomponente verbunden, indem der Stutzen um mehr als die vorgegebene Strecke in die Hülse eingeführt wird, sodass die erste Verschlusseinrichtung und die zweite Verschlusseinrichtung geöffnet werden. Die Kupplungskomponenten können dann arretiert werden. Vorzugsweise wird, bevor und während die erste Kupplungskomponente und die zweite Kupplungskomponente verbunden werden, ein Spülfluid in den Stutzen eingebracht. Damit wird erreicht, dass ein beim Verbinden entstehender Totraum gespült (bzw. belüftet) wird, sodass dort keine unerwünschten Partikel verbleiben. Außerdem kann ein Blinddeckel für die erste Kupplungskomponente vorgesehen sein, der bei Nichtverwendung der ersten Kupplungskomponenten auf deren Stutzen aufgebracht ist. Diese wird dann nach Start des Spülens abgenommen. Nach hergestellter Verbindung kann der Transfer des Fluids erfolgen.

Die Erfindung betrifft auch ein Verfahren zum Trennen einer Verbindung zum Transfer eines Fluids, die unter Verwendung einer erfindungsgemäßen Kupplungsvorrichtung hergestellt worden ist. Das Trennen erfolgen z.B. nach Transfer des Fluids. Hierbei werden die erste Kupplungskomponente und die zweite Kupplungskomponente getrennt, indem der Stutzen aus der Hülse herausgeführt wird (ggf. nach Lösen der Arretierung), wobei die erste Verschlusseinrichtung und die zweite Verschlusseinrichtung verschlossen werden. Vorzugsweise wird, bevor und während die erste Kupplungskomponente und die zweite Kupplungskomponente getrennt werden, ein Spülfluid in den Stutzen eingebracht. Zweckmäßig ist es, wenn das Spülfluid weiterhin nachdem die erste Kupplungskomponente und die zweite Kupplungskomponente getrennt worden sind, in den Stutzen eingebracht wird, insbesondere für eine vorgegebene Zeitdauer. Damit werden unerwünschte Partikel im Stutzen vermieden. Der erwähnte Blinddeckel kann nach Trennen der Verbindung, aber vorzugsweise vor Ende des Spülens, wieder auf den Stutzen aufgebracht werden.

Die Erfindung betrifft auch eine Verwendung einer erfindungsgemäßen Kupplungsvorrichtung zum Herstellen einer Verbindung zum Transfer eines Fluids, insbesondere eines gasförmigen oder verflüssigten Gases, zwischen einem ersten Behälter und einem zweiten Behälter.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

- Figur 1: zeigt schematisch eine Anwendung einer erfindungsgemäßen Kupplungsvorrichtung in einer bevorzugten Ausführungsform.
- Figuren 2a, 2b, 2c und 2d: zeigen schematisch eine erfindungsgemäße Kupplungsvorrichtung in einer weiteren bevorzugten Ausführungsform in verschiedenen Ansichten.
- Figur 3: zeigt schematisch einen Ablauf eines erfindungsgemäßen Verfahrens in einer bevorzugten Ausführungsform.

### Ausführliche Beschreibung der Zeichnung

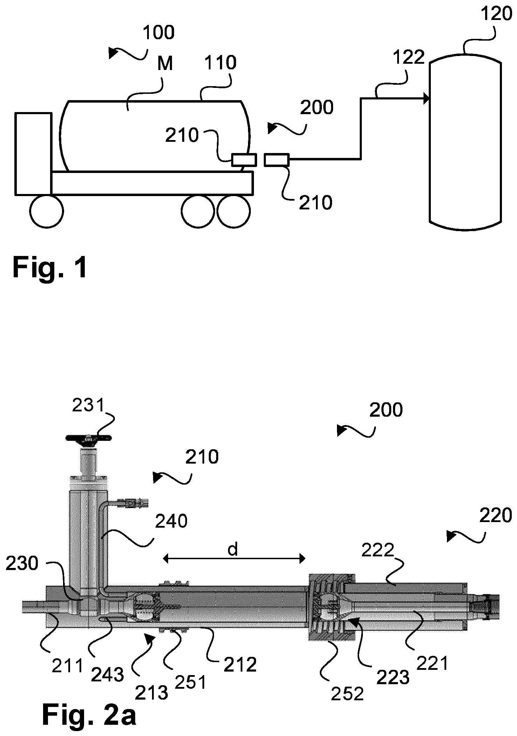

In Figur 1 ist schematisch eine beispielhafte Anwendung einer erfindungsgemäßen Kupplungsvorrichtung 200 in einer bevorzugten Ausführungsform dargestellt. Hierzu sind ein Tank-LKW 100 mit einem Tank 110 als erstem Behälter und ein zweiter Behälter 120, z.B. ein Speichertank an einer Wasserstofftankstelle, gezeigt. Dabei soll Wasserstoff als Fluid M von dem ersten in den zweiten Behälter transferiert bzw. umgefüllt werden. Hierzu wird eine Fluidverbindung zwischen dem ersten Behälter 110 und dem zweiten Behälter 120 hergestellt, und zwar mittels der Kupplungsvorrichtung 200.

Die Kupplungsvorrichtung 200 weist eine erste Kupplungskomponente 210 und eine zweite Kupplungskomponente 220 auf. Die erste Kupplungskomponente 210 ist am Tank-LKW 100 angeordnet und dort mit dem ersten Behälter 110 verbunden bzw. an diesen angeschlossen. Die zweite Kupplungskomponente 220 ist über einen Schlauch 122 (oder eine andere Verbindungsleitung) an den zweiten Behälter 120 angeschlossen.

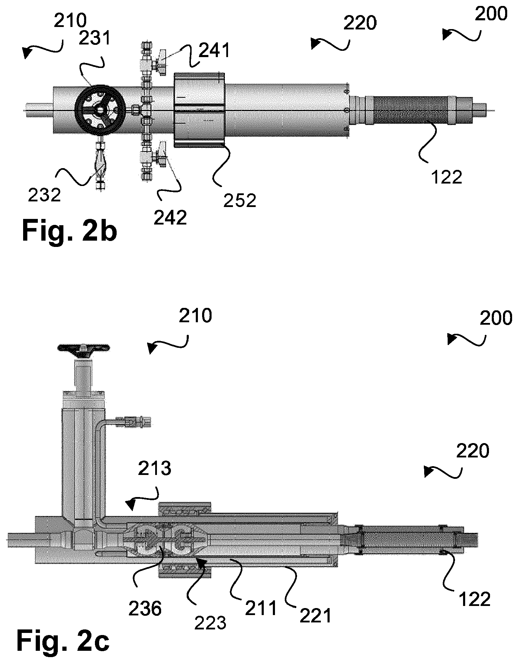

In den Figuren 2a bis 2d ist schematisch eine erfindungsgemäße Kupplungsvorrichtung 200 (wie z.B. in Figur 1 nur grob schematisch gezeigt) dargestellt, und zwar in verschiedenen Ansichten. In Figur 2a sind die erste Kupplungskomponente 210 und die zweite Kupplungskomponente 220 voneinander getrennt und in Schnittansicht zu sehen. In Figur 2b sind die erste Kupplungskomponente 210 und die zweite Kupplungskomponente 220 miteinander verbunden und von oben ohne Schnittansicht zu sehen.
In Figur 2c sind die erste Kupplungskomponente 210 und die zweite Kupplungskomponente 220 miteinander verbunden und in Schnittansicht zu sehen (Ansicht wie in Figur 2a). In Figur 2c sind Teile der ersten Kupplungskomponente 210 und der zweiten Kupplungskomponente 220 in Schnittansicht zu sehen, wenn sie noch nicht vollständig miteinander verbunden sind. Die Figuren 2a bis 2d sollen nachfolgend übergreifend beschrieben werden.

Die erste Kupplungskomponente 210 weist eine erste Fluidleitung 211 auf, und die zweite Kupplungskomponente 220 weist eine zweite Fluidleitung 221 auf. Die erste Kupplungskomponente 210 ist an einem behälterseitigen Ende (in den Figuren 1a bis 2c links) mit der ersten Fluidleitung 211 an den ersten Behälter angeschlossen bzw. anzuschließen. Die zweite Kupplungskomponente 220 ist mit der zweiten Fluidleitung 221 an einem behälterseitigen Ende (in den Figuren 2a bis 2c rechts) an den zweiten Behälter angeschlossen bzw. anzuschließen, und zwar z.B. mittels des Schlauchs 122 wie auch in Figur 1 gezeigt.

Die erste Kupplungskomponente 210 weist an einem verbindungsseitigen Ende (in den Figuren 2a bis 2c rechts) einen Stutzen 212 auf, die zweite Kupplungskomponente 220 weist an einem verbindungsseitigen Ende (in den Figuren 2a bis 2c links) eine Hülse 222 auf. Der Stutzen 212 ist hier rohrförmig ausgebildet, die Hülse 222 ebenso. Der Stutzen 212 und die Hülse 222 sind derart ausgebildet, dass der Stutzen 212 passgenau in die Hülse 222 einführbar, d.h. der Außendurchmesser des Stutzens 212 ist z.B. nur geringfügig geringer als der Innendurchmesser der Hülse 222.

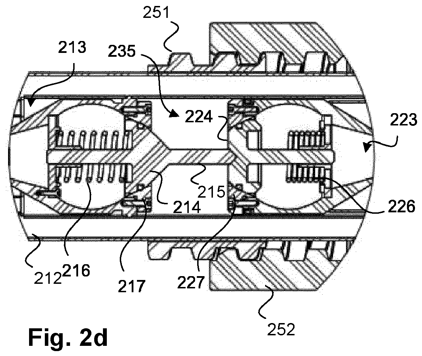

Die erste Kupplungskomponente 210 weist eine erste Verschlusseinrichtung 213 und die zweite Kupplungskomponente 220 weist eine zweite Verschlusseinrichtung 223 auf. Diese sind in Figur 2d näher dargestellt. Die erste Verschlusseinrichtung 213 weist einen mittels Federkraft beaufschlagten ersten Kolben 214 auf; die Federkraft wird hier über eine Feder 216 bereitgestellt. Dabei ist die erste Verschlusseinrichtung 213 derart ausgebildet, dass die erste Fluidleitung 211 mittels des ersten Kolbens 214 verschließbar und öffenbar ist. Hierzu weist die erste Verschlusseinrichtung 213 auch einen Sitz 217 für den Kolben 214 auf. Mittels der Feder 216 wird der erste Kolben 214 in den Sitz 217 gedrückt. Die erste Verschlusseinrichtung 213 ist hier innerhalb des Stutzens 212, aber von dessen verbindungsseitigem Ende entfernt angeordnet.

Die zweite Verschlusseinrichtung 223 weist einen mittels Federkraft beaufschlagten zweiten Kolben 224 auf; die Federkraft wird hier über eine Feder 226 bereitgestellt.

Dabei ist die erste Verschlusseinrichtung 223 derart ausgebildet, dass die zweite Fluidleitung 221 mittels des zweiten Kolbens 224 verschließbar und öffenbar ist. Hierzu weist die zweite Verschlusseinrichtung 223 auch einen Sitz 227 für den Kolben 224 auf. Mittels der Feder 226 wird der zweite Kolben 224 in den Sitz 227 gedrückt. Die zweite Verschlusseinrichtung 223 ist hier innerhalb (in radialer Richtung) der Hülse 212 angeordnet, und an oder ggf. auch (in axialer Richtung) außerhalb von deren verbindungsseitigem Ende.

Nachfolgend soll die Funktionsweise der Kupplungsvorrichtung im Rahmen einer Erläuterung des Herstellens einer Verbindung für den Transfer des Fluids erläutert werden. Vor dem Verbinden sind die erste Kupplungskomponente 210 und die zweite Kupplungskomponente 220 voneinander getrennt, wie in Figur 2a zu sehen, werden aber aufeinander ausgerichtet. Es wird dann der Stutzen 212 in die Hülse 222 eingeführt bzw. eingeschoben. Dabei umgibt der Stutzen 212 die zweite Verschlusseinrichtung 223.

Beim Einführen gelangt irgendwann der erste Kolben 214 mit dem zweiten Kolben 224 in Kontakt, wie in Figur 2d zu sehen. Dabei weist der erste Kolben 214 eine Nase oder einen Stift 215 auf, der in Richtung des zweiten Kolbens 224 vorsteht. Über diese Nase 215 gelangen die beiden Kolben in Kontakt. In der in Figur 2d gezeigten Situation sind beide Kolben gerade in Kontakt gelangt, die beiden Verschlusseinrichtungen 213, 223 sind noch verschlossen.

Es werden die beiden Kupplungskomponenten 210, 220 nun - mit mehr Kraft - weiter aufeinander zubewegt, wodurch sich der erste Kolben 214 und der zweite Kolben 224 gegenseitig mit Kraft beaufschlagen und sich gegenseitig gegen die jeweilige Federkraft aufdrücken, sodass beide Verschlusseinrichtungen 213, 223 gleichzeitig geöffnet werden. Durch geeignete Wahl der Federn 216, 226 bzw. der Federkräfte kann z.B. erreicht werden, dass beide Kolben gleichmäßig und zugleich aufgedrückt werden. Ebenso möglich ist aber, dass zuerst ein Kolben aufgedrückt wird und erst dann, wenn dieser eine Kolben in Anschlag ist, der andere Kolben aufgedrückt wird.

In Figur 2c ist eine Situation dargestellt, in der die beiden Kupplungskomponenten 210, 220 vollständig ineinander geführt sind, der Stutzen 212 ist bis zu einem Anschlag in die Hülse 222 eingeführt. Die beiden Verschlusseinrichtungen 213, 223 liegen aneinander an und sind beide geöffnet. Damit ist grundsätzlich eine Fluidverbindung hergestellt (vorbehaltlich eines ggf. noch zu öffnenden Ventils, das nachfolgend noch erwähnt wird). Der Stutzen 212 ist hierbei um mehr als eine vorgegebene Strecke d in die Hülse 222 eingeführt. Die Strecke d gibt z.B. an, wie weit der Stutzen 212 in die Hülse 222 eingeführt werden muss, damit die beiden Verschlusseinrichtungen 213, 223 geöffnet werden. Bei zugleich öffnenden beiden Verschlusseinrichtungen würde die Strecke d mit der Situation in Figur 2d erreicht sein, da mit weiterem einschieben beide Kolben aufgedrückt werden. Es versteht sich, dass der Anschlag möglichst erst dann erreicht sein soll, wenn die beiden Kolben jeweils weit genug aufgedrückt sind, um einen ausreichenden Volumenstrom zu ermöglichen.

Wenn der Anschlag erreicht ist und die beiden Verschlusseinrichtungen 213, 223 geöffnet sind, können mittels einer Arretierungseirichtung, hier aufweisend ein Gewinde 251 an dem Stutzen 212 und eine Mutter 252 an der Hülse 222, die beiden Kupplungskomponenten 210, 220 arretiert bzw. fixiert werden. Die Mutter 252 kann hierzu einfach auf das Gewinde 251 geschraubt werden.

Weiterhin weist die erste Kupplungskomponente 210 ein Ventil 230 auf, mittels dessen die erste Fluidleitung 211 verschließbar und öffenbar ist. Hierzu ist ein Handrad 231 vorgesehen, mittels dessen das Ventil 230 manuell geöffnet und geschlossen, ggf. auch nur teilweise geöffnet, werden kann. Außerdem kann für die Fluidleitung 211 ein weiteres Ventil 232 vorgesehen sein.

Weiterhin weist die erste Kupplungskomponente 210 eine Spülleitung 240 auf, die derart ausgebildet ist, dass ein Spülfluid wie z.B. Helium in den Stutzen 212 einbringbar ist. Zudem ist hier eine weitere Spülleitung 243 vorgesehen, die z.B. von der Spülleitung 240 abzweigt, und an anderer Stelle in den Stutzen 212 führt. Dabei sind zwei Ventile 241, 242 an der Spülleitung 240 vorgesehen, um die Spülleitung zu öffnen und schließen. Vorteilhafterweise wird ein Ventil (z.B. Ventil 241) als Spülventil für gasförmiges Helium oder gasförmigen Wasserstoff eingesetzt. Das Ventil verbindet ein Druckreservoir mit der Spülleitung 240. Ebenso kann über die Leitung 240 Fluid aus der Kupplungsvorrichtung z.B. über einen angeschlossenen Kamin ins Freie über das Ventil 242 abgelassen werden. So kann in der Kupplung akkumulierter flüssiger Wasserstoff durch wechselweise Belastung mit Spülgas und die anschließende Entlastung oder die reine Entlastung über das Ventil 242 freigespült werden.

Durch Öffnen des Ventils 242 während des Kuppelvorgangs kann das in der Kupplung eingeschlossene Gas entweichen. Der Kuppelvorgang ist mit wenig Kraftaufwand möglich. Ein bei geschlossener Kupplung zu spülender Raum ist in Fig. 2c mit 236 bezeichnet. Durch Öffnen des Ventils 241 beim Trennen wird ein Überdruck im Ventil erzeugt und so der Trennvorgang unterstützt.

Wenn Spülfluid in den Stutzen 212 eingebracht wird, kann dieses z.B. durch geeignete Formgebung der ersten Verschlusseinrichtung 213 und ggf. auch der zweiten Verschlusseinrichtung 223 an diesen vorbeiströmen, in den Spülraum bzw. Totraum 235, der in Figur 2d zu sehen ist. Für den etwaigen verbleibenden Raum 236 bei geschlossener Kupplung können z.B. die beiden Spülleitungen 240, 243 verwendet werden.

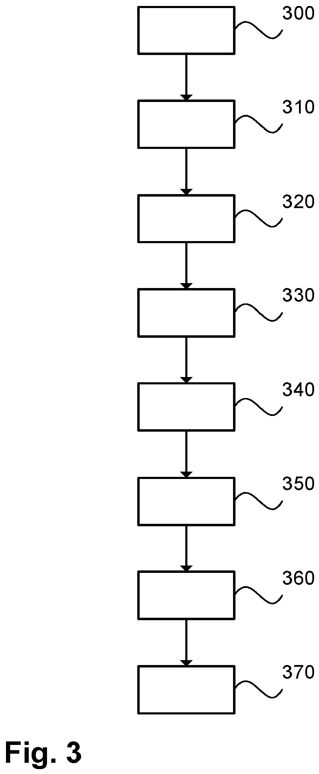

In Figur 3 ist schematisch ein Ablauf eines erfindungsgemäßen Verfahrens in einer bevorzugten Ausführungsform dargestellt, der hier zunächst ein Herstellen der Verbindung und danach auch ein Trennen der Verbindung umfasst, was an sich auch unabhängig voneinander erfolgen kann.

In Schritt 300 wird zunächst ein Spülen des Stutzens der ersten Kupplungskomponente gestartet, es wird Spülfluid in den Stutzen eingebracht. Hierbei kann ein, z.B. beheizter, (in den Figuren 2a bis 2d nicht gezeigter) Blind- oder Verschlussdeckel auf dem Stutzen noch aufgebracht sein, der nach Start des Spülens abgenommen werden kann. Dann werden, Schritt 310, die erste Kupplungskomponente und die zweite Kupplungskomponente verbunden, wie vorstehend erläutert, insbesondere auch arretiert. Es kann dann, Schritt 320, das Spülen gestoppt werden und es kann, Schritt 330, der Transfer des Fluids durch Öffnen des Ventils begonnen werden.

Nach Ende des Transfers kann das Ventil geschlossen werden und es kann, Schritt 340, ein Spülen des Stutzens der ersten Kupplungskomponente gestartet werden, es wird Spülfluid in den Stutzen eingebracht. Es folgt, Schritt 350, das Trennen der ersten Kupplungskomponente und der zweiten Kupplungskomponente. Auch nach dem Trennen ist das Spülen (bzw. Belüften) noch aktiv. Es kann dann, Schritt 360, der Blind- oder Verschlussdeckel wieder auf den Stutzen aufgebracht werden. Nach Ablauf einer gewissen Zeit kann, Schritt 370, das Spülen dann beendet werden.

Die hier vorgeschlagene Kupplungsvorrichtung erlaubt es, eine Verbindung zum Transfer von Fluid deutlich schneller herzustellen als bisher, z.B. innerhalb von z.B. 10 Minuten. Damit werden Transfer- bzw. Umfüllzeiten insgesamt deutlich reduziert, Instandhaltungskosten sind aufgrund weniger oder keiner anfälligen Komponenten ebenfalls reduziert. Die Handhabung wird erleichtert, der die zweite Komponenten mit Schlauch z.B. vor Ort belassen werden kann. Es ergibt sich auch keine Gefahr aufgrund Dichtungsproblemen (mit z.B. O-Ringen) mehr.

## Patentansprüche

1. Kupplungsvorrichtung (200) zum Herstellen einer Verbindung zum Transfer eines Fluids (M), insbesondere eines gasförmigen oder verflüssigten Gases, zwischen einem ersten Behälter (110) und einem zweiten Behälter (120), aufweisend eine erste Kupplungskomponente (210) mit einer ersten Fluidleitung (211) und eine zweite Kupplungskomponente (220) mit einer zweiten Fluidleitung (221),
wobei die erste Kupplungskomponente (210) an einem behälterseitigen Ende mit der ersten Fluidleitung an den ersten Behälter angeschlossen ist oder anzuschließen ist, wobei die zweite Kupplungskomponente mit der zweiten Fluidleitung an einem behälterseitigen Ende an den zweiten Behälter angeschlossen ist oder anzuschließen ist,
wobei die erste Kupplungskomponente (210) an einem verbindungsseitigen Ende einen Stutzen (212) aufweist, wobei die zweite Kupplungskomponente (220) an einem verbindungsseitigen Ende eine Hülse (222) aufweist, wobei der Stutzen und die Hülse derart ausgebildet sind, dass der Stutzen, insbesondere passgenau, in die Hülse einführbar ist,
wobei die erste Kupplungskomponente (210) eine erste Verschlusseinrichtung (213) mit einem mittels Federkraft beaufschlagten ersten Kolben (214) aufweist, wobei die erste Verschlusseinrichtung derart ausgebildet ist, dass die erste Fluidleitung mittels des ersten Kolbens verschließbar und öffenbar ist,
wobei die zweite Kupplungskomponente (220) eine zweite Verschlusseinrichtung (223) mit einem mittels Federkraft beaufschlagten zweiten Kolben (224) aufweist, wobei die zweite Verschlusseinrichtung derart ausgebildet ist, dass die zweite Fluidleitung mittels des zweiten Kolbens verschließbar und öffenbar ist,
wobei die erste Kupplungskomponente (210) und die zweite Kupplungskomponente (220) derart ausgebildet sind, dass, wenn der Stutzen um mehr als eine vorgegebene Strecke (d) in die Hülse eingeführt ist, der erste Kolben und der zweite Kolben jeweils mit einer Kraft beaufschlagt sind, sodass die erste Verschlusseinrichtung und die zweite Verschlusseinrichtung geöffnet sind.

2. Kupplungsvorrichtung (200) nach Anspruch 1, wobei die erste Kupplungskomponente (210) und die zweite Kupplungskomponente (220) derart ausgebildet sind, dass, wenn der Stutzen um weniger als die vorgegebene Strecke in die Hülse eingeführt ist, die erste Verschlusseinrichtung und die zweite Verschlusseinrichtung verschlossen sind.

3. Kupplungsvorrichtung (200) nach Anspruch 1 oder 2, wobei der erste Kolben (214) und der zweite Kolben (224) derart ausgebildet sind, dass, wenn der Stutzen um mehr als die vorgegebene Strecke in die Hülse eingeführt ist, sich der der erste Kolben und der zweite Kolben gegenseitig mit Kraft beaufschlagen.

4. Kupplungsvorrichtung (200) nach einem der vorstehenden Ansprüche, wobei die erste Kupplungskomponente (210) und die zweite Kupplungskomponente (220) derart ausgebildet sind, dass der Stutzen bis zu einem Anschlag in die Hülse einführbar ist, wobei, wenn der Stutzen bis zu dem Anschlag in die Hülse eingeführt ist, die Hülse um mehr als die vorgegebene Strecke in die Hülse eingeführt ist und die erste Verschlusseinrichtung (213) und die zweite Verschlusseinrichtung (223) aneinander anliegen.

5. Kupplungsvorrichtung (200) nach einem der vorstehenden Ansprüche, wobei der Stutzen (212) rohrförmig ausgebildet ist, und wobei die zweite Verschlusseinrichtung in der zweiten Kupplungskomponente derart angeordnet ist, dass, wenn der Stutzen in die Hülse eingeführt wird oder ist, der Stutzen die zweite Verschlusseinrichtung umgibt.

6. Kupplungsvorrichtung (200) nach einem der vorstehenden Ansprüche, wobei die erste Kupplungskomponente (210) ein Ventil (230) aufweist, mittels dessen die Fluidleitung der ersten Kupplungskomponente verschließbar und öffenbar ist.

7. Kupplungsvorrichtung (200) nach einem der vorstehenden Ansprüche, wobei die erste Kupplungskomponente (210) wenigstens eine Spülleitung (240, 243) aufweist, die derart ausgebildet ist, dass ein Spülfluid in den Stutzen einbringbar ist.

8. Kupplungsvorrichtung (200) nach einem der vorstehenden Ansprüche, aufweisend eine Arretierungseinrichtung (252, 252), mittels welcher die erste Kupplungskomponente und die zweite Kupplungskomponente, wenn der Stutzen um mehr als die vorgegebene Strecke in die Hülse eingeführt ist, arretierbar sind.

9. Kupplungsvorrichtung (200) nach Anspruch 8, wobei die Arretierungseinrichtung ein an der ersten oder zweiten Kupplungskomponente angeordnetes Gewinde (251) und ein an der zweiten oder ersten Kupplungskomponente angeordnete Mutter (252) aufweist.

10. Verfahren zum Herstellen einer Verbindung zum Transfer eines Fluids, insbesondere eines gasförmigen oder verflüssigten Gases, zwischen einem ersten Behälter und einem zweiten Behälter, unter Verwendung einer Kupplungsvorrichtung (200) nach einem der vorstehenden Ansprüche,
wobei die erste Kupplungskomponente (210) und die zweite Kupplungskomponente (220) verbunden werden, indem der Stutzen um mehr als die vorgegebene Strecke in die Hülse eingeführt wird, sodass die erste Verschlusseinrichtung und die zweite Verschlusseinrichtung geöffnet werden.

11. Verfahren nach Anspruch 10, wobei, bevor und während die erste Kupplungskomponente und die zweite Kupplungskomponente verbunden werden, ein Spülfluid in den Stutzen eingebracht wird.

12. Verfahren zum Trennen einer Verbindung zum Transfer eines Fluids, insbesondere eines gasförmigen oder verflüssigten Gases, zwischen einem ersten Behälter und einem zweiten Behälter, die unter Verwendung einer Kupplungsvorrichtung (200) nach einem der Ansprüche 1 bis 9 hergestellt worden ist,
wobei die erste Kupplungskomponente (210) und die zweite Kupplungskomponente (220) getrennt werden, indem der Stutzen aus der Hülse herausgeführt wird, wobei die erste Verschlusseinrichtung und die zweite Verschlusseinrichtung verschlossen werden.

13. Verfahren nach Anspruch 12, wobei bevor und während die erste Kupplungskomponente und die zweite Kupplungskomponente getrennt werden, ein Spülfluid, insbesondere Helium oder Wasserstoff, in den Stutzen eingebracht wird.

14. Verfahren nach Anspruch 13, wobei das Spülfluid weiterhin nachdem die erste Kupplungskomponente und die zweite Kupplungskomponente getrennt worden sind, in den hohlwandig ausgebildeten Stutzen eingebracht wird, insbesondere für eine vorgegebene Zeitdauer.

15. Verwendung einer Kupplungsvorrichtung (200) nach einem der Ansprüche 1 bis 9 zum Herstellen einer Verbindung zum Transfer eines Fluids, insbesondere eines gasförmigen oder verflüssigten Gases, zwischen einem ersten Behälter und einem zweiten Behälter.
